# EUROPEAN PATENT APPLICATION

(11) **EP 2 269 791 A1**
(43) Date of publication of application: **05.01.2011**
(21) Application number: 08862785.6
(22) Date of filing: 16.12.2008
(51) Int. Cl.: B28D 1/24, B23D 47/12, E02F 3/36

(54) **CUTTING DEVICE WITH RING SAW**

(30) Priority: 19.12.2007 JP 2007327782
(71) Applicant: Matsuura, Kazumasa, Hiroshima 729-1211 (JP)
(72) Inventor: Matsuura, Kazumasa, Hiroshima 729-1211 (JP)
(74) Representative: Hopkin, Tobias J.B.
(86) International application number: PCT/JP2008/072833
(87) International publication number: WO 2009/078400

(57) **Abstract**

A cutting apparatus with a ring saw which can easily carry out a high-speed cutting by rotating while applying an impact force, crushing a base rock, a stone, a concrete or the like, and cutting while flicking the crushed portion is provided. Further, a user-friendly cutting apparatus with a ring saw which can easily carry out an operation at a time of attaching as an attachment to a shovel type excavating machine such as a backhoe or the like is also provided. The cutting apparatus with the ring saw in accordance with this invention is a cutting apparatus with a ring saw provided with a cutting blade, and a driving step rotationally driving the ring saw around a center axis thereof, in which the ring saw is supported to a support body attached to an apparatus main body so as to freely oscillate in a cutting and traveling direction, and an impact applying step is provided so as to apply an impact force to a subject to be cut from a cutting blade of the ring saw under rotation.

## Description

### BACKGROUND OF THE INVENTION

### Field of the Invention

The present invention relates to a cutting apparatus with a ring saw, and more particularly to a cutting apparatus with a ring saw which is preferably used by being detachable mounted as an attachment to a shovel type excavating machine such as a backhoe or the like.

### Description of the Related Art

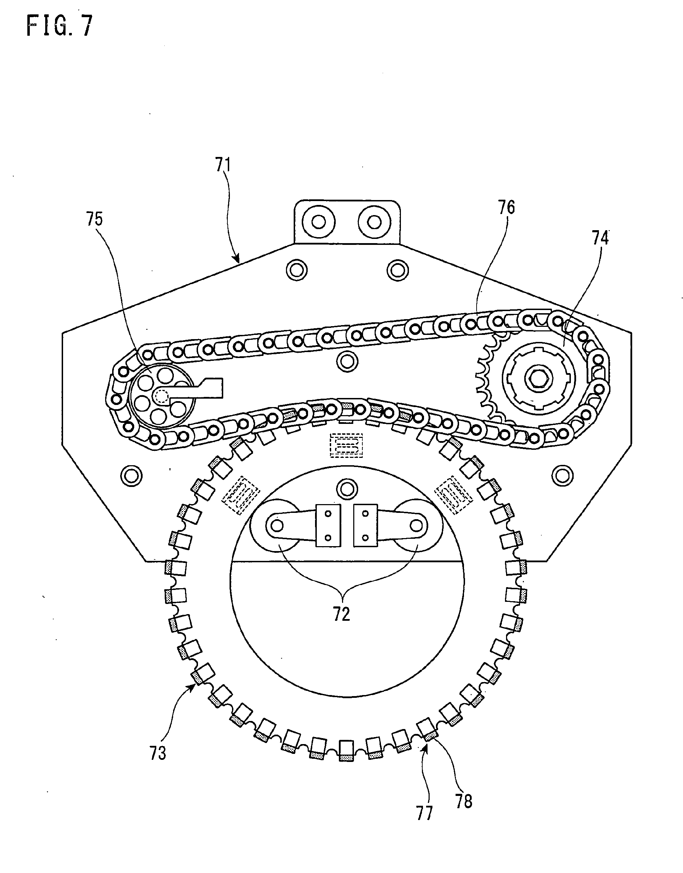

A conventional example of the cutting apparatus with the ring saw which is detachably mounted as the attachment to the shovel type excavating machine such as the backhoe or the like is shown in Fig. 7. As shown in the drawing, this apparatus is structured such as to cut a subject to be cut such as a base rock, a stone, a concrete or the like by supporting an inner peripheral side of a ring saw 73 by means of two support rollers 72 which are attached to a base member constructing an apparatus main body 71, and rotationally driving the ring saw 73 by means of an annular chain 76 which is wound around a driving sprocket 74 and a driven pulley 75. In this case, a plurality of detachable cutting blades 77 are implanted to an outer periphery of the ring saw 73 so as to be along an outer periphery thereof, and a cutting edge 78 of each of the cutting blades 77 is formed by a diamond chip. The cutting apparatus with the ring saw as mentioned above is disclosed, for example, in patent document 1.
Patent Document 1: Japanese Unexamined Patent Publication No. 2004-25420

### Summary of the Invention

Since the cutting apparatus having the structure mentioned above is structured such as to cut the base rock, the stone, the concrete or the like by rotationally driving the ring saw, and the ring saw 73 is structured such that a center axis thereof is not fixed, an oscillation generated at a time of driving is transmitted as it is to the ring saw, and the ring saw oscillates, so that it is hard to carry out a stable cutting motion. Further, this cutting apparatus is used by being attached as the attachment to the shovel type excavating machine such as the backhoe or the like, however, since it is necessary to maintain a pressing force applied to the subject to be cut from the ring saw in a suitable state, at a time of using, a high-level operating technique in conformity to a cutting speed is required. Accordingly, a work for cutting the base rock, the stone, the concrete or the like becomes hard.

Further, in addition to the above, the diamond chip is used for the cutting edge of the ring saw, a texture crushing is generated in the cutting edge and a defect or the like is generated, at a time when the oscillation or a impact is transmitted to the cutting edge, thereby causing a wide reduction of a cutting capacity. Further, since a service life of the cutting edge becomes short, and a replacing work thereof is increased, a reduction of a cutting efficiency is generated, and since the diamond chip is expensive, a cost becomes high and this structure is not economical.

Accordingly, this invention is made for the purpose of solving the problem mentioned above, and an object of the present invention is to provide a cutting apparatus with a ring saw which can easily carry out a high-speed cutting by rotating the ring saw while applying an impact force, crushing a base rock, a stone, a concrete or the like, and cutting while flicking the crushed portion. Further, an object of the present invention is to provide a user-friendly cutting apparatus with a ring saw which can easily carry out an operation at a time of attaching as an attachment to a shovel type excavating machine such as a backhoe or the like.

In order to solve the problem mentioned above, there is provided a cutting apparatus with a ring saw, comprising:
a ring saw 4 provided with a cutting blade 21; and
a driving means 5 rotationally driving the ring saw 4 around a center axis thereof,
wherein the ring saw 4 is supported to a support body 3 attached to an apparatus main body 2 so as to freely oscillate in a cutting and traveling direction, and an impact applying means 6 is provided so as to apply an impact force to a subject 31 to be cut from a cutting blade 21 of the ring saw 4 under rotation.

Specifically, the impact applying means 6 is provided with an impact generating means 51 constructed by any one of a hydraulic breaker, an air breaker, a hydraulic drifter, an air drifter and a vibrator while having a striking rod 52 structured such as to be movable forward and backward with respect to the ring saw 4, and a striking force transmission body 53 rotatably attached to a leading end portion of the striking rod 52 of the impact generating means 51 and rotating while coming into contact with the cutting blades 21 in an outer peripheral portion of the ring saw 4.

Further, the impact applying means 6 is provided with an impact generating means 51 constructed by any one of a hydraulic breaker, an air breaker, a hydraulic drifter, an air drifter and a vibrator while having a striking rod 52 structured such as to be movable forward and backward with respect to the ring saw 4, and a striking force transmission body 53 rotatably attached to a leading end portion of the striking rod 52 of the impact generating means 51 and coming into slidable contact with an inner peripheral portion of the ring saw 4.

Further, a lubricant agent is filled in a contact portion between the striking force transmission body 53 and the ring saw 4.

Further, the support body 3 is constructed by a support roller which is rotatably attached to the apparatus main body 2, and supports an inner peripheral surface of the ring saw 4.

Further, the ring saw 4 is constructed by a ring saw main body 20, and a cutting blade 21 obtained by attaching a cutting edge 23 to a base body 22a which is detachable with respect to the ring saw main body 20, and the cutting blade 21 is constructed by a cemented carbide chip in its cutting edge 23, is embedded and fixed to the base body 22a, and is set to a state in which a head portion protrudes from the base body 22a.

Further, in a thickness in a cutting groove width direction, a thickness direction of the base body 22a is made larger than a thickness of the ring saw main body 20.

Further, the driving means 5 is constructed by an annular chain 41 and a drive transmitting rotation body 42, and is provided with an energizing means 10 energizing the support roller 3 to a direction of the annular chain 41 at a time of supporting the ring saw 4 by the support roller 3.

In the cutting apparatus with the ring saw in accordance with this invention, since the ring saw is supported by the support body so as to freely oscillate along the cutting direction, and the impact applying means is provided so as to apply the impact force to the subject to be cut from the cutting blade of the ring saw, the structure is made such as to cut while applying a strong impact to the subject to be cut by the impact applying means. In other words, since the subject to be cut such as the base rock, the stone, the concrete or the like is crushed, and is cut while flicking the crushed portion, it is possible to cut at a high speed, and it is possible to achieve an improvement of a cutting efficiency. In other words, the cutting apparatus is structured such as to achieve an improvement of a cutting performance by positively utilizing the structure in which the support center of the ring saw is hard to be defined, that is, such a characteristic that the ring saw is an easily oscillating apparatus, and positively applying an impact oscillating force in place of preventing the oscillation. On the contrary, this matter means that a necessity for regulating the pressing force applied to the subject to be cut from the ring saw is not required so much in comparison with the conventional one. As a result, there is generated an advantage that the operation is easily carried out at a time of being used while being attached to the backhoe or the like.

Further, since the impact applying means is provided with the impact generating means constructed by any one of the hydraulic breaker, the air breaker, the hydraulic drifter, the air drifter and the vibrator while having the striking rod structured such as to be movable forward and backward with respect to the ring saw, and the striking force transmission body rotatably attached to the leading end portion of the striking rod of the impact generating means and rotating while coming into contact with the cutting blades in the outer peripheral portion of the ring saw, it is possible to efficiently apply the striking force to the ring saw.

Further, the impact applying means is provided with the impact generating means constructed by any one of the hydraulic breaker, the air breaker, the hydraulic drifter, the air drifter and the vibrator while having the striking rod structured such as to be movable forward and backward with respect to the ring saw, and the striking force transmission body rotatably attached to the leading end portion of the striking rod of the impact generating means and coming into slidable contact with the inner peripheral portion of the ring saw, it is possible to directly and efficiently apply the striking force to the subject to be cut, it is possible to further improve the cutting performance, it is possible to effectively utilize the space of the apparatus main body, and it is possible to make the apparatus main body compact.

Further, since the lubricant agent is filled in the contact portion between the striking force transmission body and the ring saw, it is possible to smoothly slide the striking force transmission body and the ring saw.

Further, since the support roller is used for the support body 3 which is rotatably attached to the apparatus main body, and supports the inner peripheral surface of the ring saw, a friction between the ring saw and the support body going with the rotation of the ring saw is widely reduced, and it is possible to smoothly rotate and oscillate the ring saw.

Further, since the cemented carbide chip which is tough and has a durability can be used for the cutting edge of the cutting blade, and the cutting edge thereof is set to the state in which the head portion protrudes from the base body, the texture crushing, the defect or the like is hard to be generated in the cutting edge, and a service life of the cutting edge becomes long. Therefore, it is possible to achieve a cost reduction, and it is possible to obtain an efficiency in the light of an economy. Therefore, it is possible to reduce a labor hour for replacing the cutting edge, and it is easy to correspond to a continuous cutting work for a long time and a cutting work over a long period of time.

Further, since the thickness of the base body is made larger than the thickness of the ring saw main body in the thickness direction of the cutting groove width direction, it is possible to reduce the contact between the subject to be cut and the side surface portion of the ring saw main body, it is possible to reduce the cutting resistance, and it is possible to improve the cutting performance further.

Further, since the driving means is constructed by the annular chain and the drive transmitting rotation body, and is provided with the energizing means energizing the support roller to the direction of the annular chain at a time of supporting the ring saw by the support roller, it is possible to securely make the ring saw oscillated by the impact applying means engage with the annular chain, it is possible to positively make it easy to carry out the oscillation of the ring saw, and it is possible to further achieve an improvement of the cutting efficiency.

### Brief Description of the Drawings

Fig. 1 is a front elevational view showing a used state of a cutting apparatus with a ring saw in accordance with an embodiment of this invention;
Fig. 2 is a front elevational view of a cutting apparatus with a ring saw in accordance with a first embodiment;
Fig. 3 is a front elevational view of a cutting apparatus with a ring saw in accordance with a second embodiment;
Fig. 4 is a cross sectional view of the second embodiment mentioned above;
Fig. 5 is a perspective view of the second embodiment mentioned above;
Fig. 6 is a perspective view of a modified embodiment of the ring saw in accordance with the second embodiment; and
Fig. 7 is a front elevational view of a conventional cutting apparatus with a ring saw.

### Detailed Description of the Preferred Embodiments

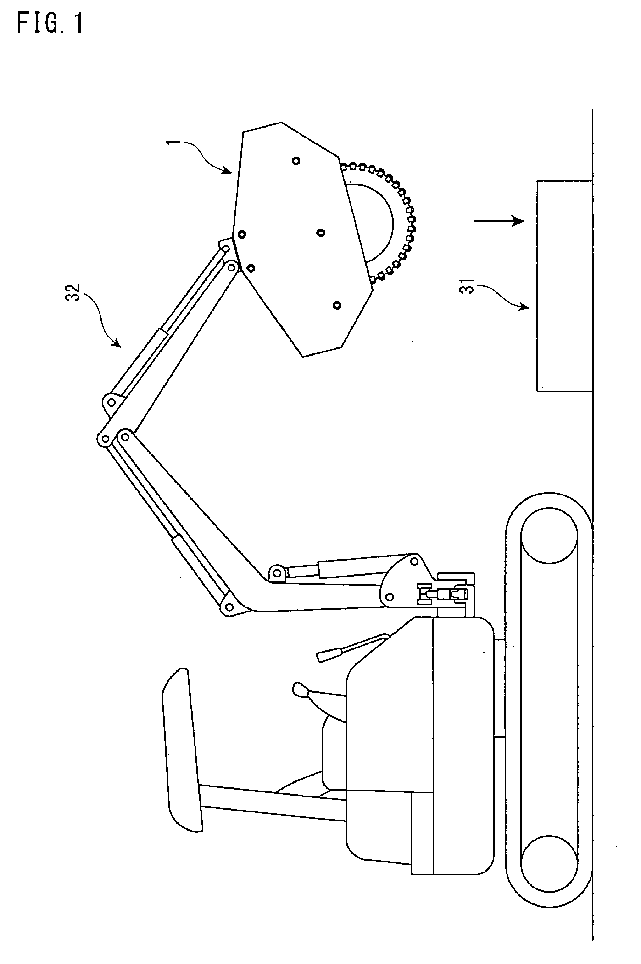

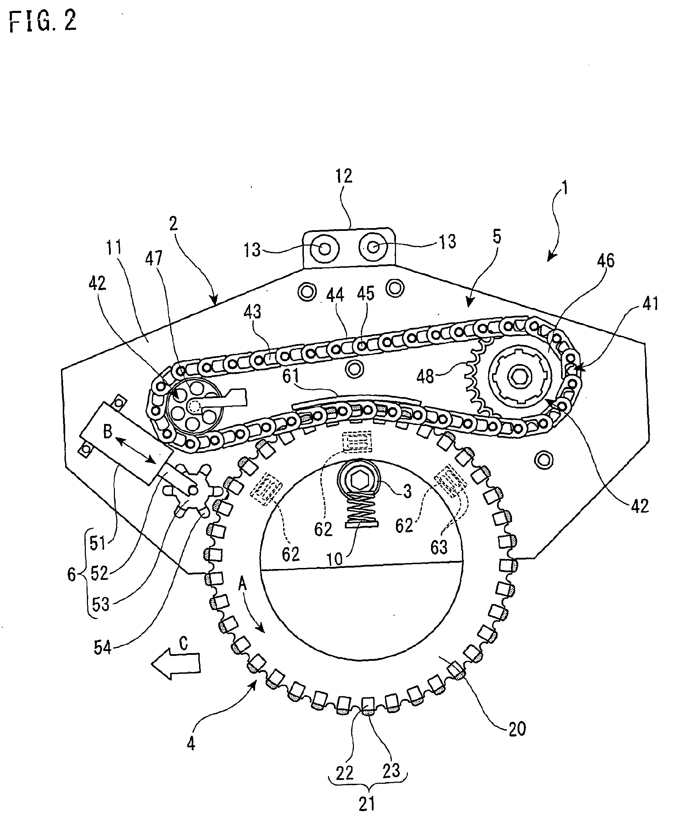

A description will be in detail given below of embodiments in accordance with this invention with reference to the accompanying drawings. A cutting apparatus 1 with a ring saw in accordance with a first embodiment of this invention is constructed by one support body 3 which is provided in a rising manner in a base member 11 constructing an apparatus main body 2, a ring saw 4 which is supported by the support body 3 so as to freely oscillate in a cutting and forward moving direction, a driving means 5 which rotationally drives the ring saw 4 around a center axis thereof in such a manner as to engage with a plurality of cutting blades 21 provided in the ring saw 4, an impact applying means 6 which applies an impact force to the ring saw 4 and dashes down the cutting blades 21 of the ring saw 4 against a subject 31 to be cut, and a cover member (not shown) which constructs the apparatus main body 2 so as to cover an upper end portion of the ring saw 4, the driving means 5 and the impact applying means 6, as shown in Figs. 1 and 2.

The apparatus main body 2 is constructed by the base member 11 and the cover member (not shown), and they are set to approximately the same dimension and approximately the same shape. As shown in Fig. 2, the base member 11 is provided with an attaching piece 12 in an upper surface thereof, and a pair of attaching holes 13 are provided in the attaching piece 12. The attaching holes 13 are utilized at a time of attaching as an attachment to a shovel type excavating machine 32 such as a hydraulic shovel, a backhoe or the like, as shown in Fig. 1.

The support body 3 constructed by a support roller which is supported by an energizing means 10 such as a spring or the like, is provided in a rising manner in a bearing which is supported to the base member 11 constructing the apparatus main body 2 via the energizing means 10 such as the spring or the like, and is set to be rotatable around an axis thereof.

The support roller 3 is energized toward an upper side (in a direction of pressing the ring saw 4 to an annular chain 41 mentioned below).

The ring saw 4 is supported by one support roller 3 in such a manner that an upper side in an inner peripheral surface thereof freely oscillates. The ring saw 4 is formed by an approximately annular ring saw main body 20, and the cutting blade 21 implanted to an outer peripheral portion thereof. Further, the cutting blade 21 is formed by a base body 22 and a cutting edge 23, and the base body 22 is structured such as to be detachable with respect to the ring saw main body 20 together with the cutting edge 23. In this case, the cutting edge 23 is constructed by a cemented carbide chip, is embedded and fixed to the base body 22, and is set to a state in which an approximately semispherical head portion protrudes from the base body 22.

The driving means 5 is structured such as to rotationally drive the ring saw 4 around a center axis thereof, and is constructed by an annular chain 41 and driving force transmitting rotating bodies 42. The annular chain 41 is constructed by a plurality of links 44 each having an opening portion 43, and pins 45, and is formed by coupling a plurality of links 44 with the pins 45 approximately in an annular shape. Further, the cutting blade 21 of the ring saw 4 is fitted between the pins 45 coupling the links 44 of the annular chain 41, the cutting blade 21 of the ring saw 4 and the annular chain 41 are engaged with each other, and the ring saw 4 is rotationally driven.

The driving force transmitting rotating bodies 42 are constructed by a driving sprocket 46 and a driven pulley 47. The driving force transmitting rotating bodies 42 are attached rotatably to the base member 11. In this case, the driving sprocket 46 is structured such as to be coupled in an interlocking manner to a hydraulic motor serving as a drive source (not shown) and be rotationally driven.

Specifically, the annular chain 41 is wound in such a manner as to be engaged with a part of a tooth 48 of the driving sprocket 46, and is wound around the driven pulley 47 in such a manner as to be enwind a part of an outer periphery thereof. In this case, a pressing force from the below to the above is applied by the energizing means 10 to a portion in which the annular chain 41 engages with the cutting blade 21 of the ring saw 4, between the driving sprocket 46 and the driven pulley 47. Accordingly, the annular chain 41 comes to a state in which it is curved while bulging upward. Further, the driving sprocket 46 rotates by driving the hydraulic motor (not shown), and the annular chain 41 is rotationally driven, whereby the ring saw 4 is rotationally driven together with the annular chain 41.

The impact applying means 6 is provided, for example, with a hydraulic drifter as an impact generating means 51, and the impact generating means 51 has a striking rod 52 which is movable forward and backward with respect to the cutting blade 21 of the ring saw 4. In this case, an air drifter, a hydraulic breaker, an air breaker or a vibrator may be used as the impact generating means 51 in addition to the hydraulic drifter. Further, a striking force transmission body 53 is rotatably attached to a leading end portion of the striking rod 52.

Further, the impact generating means 51 is provided in an outer peripheral side of the ring saw 4, and applies an impact force generated by the striking rod 52 of the impact generating means 51 to an outer peripheral surface of the ring saw 4, and the striking force transmission body 53 formed as a disc shape is structured such as to rotate while coming into contact with the portion between the cutting blades 21 of the ring saw 4.
In other words, a plurality of approximately semicircular convex portions 54 are provided along an outer periphery of the striking force transmission body 53 in such a manner as to engage with a concave portion formed between the cutting blades 21 and 21, in the outer peripheral portion of the ring saw 4.

A guide 61 and a side surface guide roller 62 are provided in the base member 11 constructing the apparatus main body 2. The guide 61 is constructed by a circular arc shaped band member protruding slightly upward, and is provided in a rising manner in the base member 11 in conformity to a position of the annular chain 41 which is wound around the driving sprocket 46 and the driven pulley 47. The guide 61 prevents the annular chain 41 from shifting in an upward direction with respect to a rotation surface of the chain. In this case, the same guide roller as mentioned above is provided in the cover member (not shown), and the other end portion of the support body 3 is supported by the cover member (not shown).

The side surface guide roller 62 is formed by arranging two approximately annular guide rollers 63 side by side in such a manner as to be along a circumferential direction of the ring saw 4. The side surface guide roller 62 is provided at three positions so as to be along the circumferential direction of the ring saw 4, in each of the base member 11 and the cover member (not shown). Further, the ring saw 4 is prevented from oscillating transversely by pinching both the side surfaces of the ring saw 4 by the side surface guide rollers 62. Accordingly, the ring saw 4 can rotate by the side guide rollers 62 in a stable state. In this case, the number, the arrangement and the attaching structure of the side surface guide rollers 62 are not limited to the above, but may be set as long as the ring saw 4 is prevented from oscillating transversely.

The cutting apparatus 1 having the structure mentioned above is attached as the attachment to the shovel type excavating machine 32 such as the hydraulic shovel, the backhoe or the like, as shown in Fig. 1, by utilizing a pair of attaching holes 13 provided in the attaching piece 12 of the apparatus main body 2. Further, if the driving sprocket 46 attached to the base member 11 is rotationally driven by the hydraulic motor (not shown), the annular chain 41 wound around the driving sprocket 46 and the driven pulley 47 is rotationally driven, and the ring saw 4 supported by the support roller 3 is rotationally driven. Further, the impact force is applied to the rotating ring saw 4, by driving the hydraulic drifter 51. In this case, the number of the support roller 3 is not limited to the above, but a plurality of support rollers 3 may be used. The point is that the ring saw 4 can be supported so as to freely oscillate in the cutting and forward moving direction.

As mentioned above, the subject 31 to be cut is crushed by applying the impact force generated by the impact generating means 51 to the rotationally driven ring saw 4 mainly toward a rear side in the cutting and forward moving direction, and applying a powerful impact to the cutting blade 21, and the high speed cut can be achieved by cutting while flicking the crushed portion, whereby it is possible to achieve an improvement of a cutting efficiency. Further, in this cutting apparatus, the improvement of the cutting performance is achieved by supporting the support roller 3 by the energizing means 10 such as the spring or the like so as to positively utilize the structure in which the support center of the ring saw 4 is hard to be defined, that is, the characteristic that the ring saw 4 is an easily oscillating apparatus, positively applying the impact oscillation force in place of preventing the oscillation, and securing the engagement between the ring saw 4 and the annular chain 41. On the contrary, this matter means that a necessity for regulating the pressing force applied to the subject to be cut from the ring saw 4 is not required so much in comparison with the conventional one. As a result, there is generated an advantage that the operation is easily carried out at a time of being used while being attached to the hydraulic shovel, the backhoe or the like. In this case, in Fig. 2, an arrow A denotes a rotating direction of the ring saw 4, an arrow B denotes a impact force applying direction, and an arrow C denotes a cutting and forward moving direction, respectively.

Further, since the cemented carbide chip which is tough and is excellent in the durability is used for the cutting edge 23 of the ring saw 4, and the cutting edge 23 is embedded and fixed, and is set to the state in which the head portion protrudes from the base body 22, the texture crushing, the defect or the like is hard to be generated in the cutting edge 23, and a service life of the cutting edge 23 becomes long. Therefore, it is possible to achieve a cost reduction, and it is possible to obtain an efficiency in the light of an economy. Therefore, it is possible to reduce a labor hour for replacing the cutting edge 23, and it is easy to correspond to a continuous cutting work for a long time and a cutting work over a long period of time.

The cutting apparatus in the structure mentioned above is preferable in being attached as the attachment mainly to the shovel type excavating machine such as the hydraulic shovel, the backhoe or the like so as to be utilized. Further, it is possible to attach to a large-scaled hydraulic shovel, backhoe or the like so as to be set to a cutting work special purpose machine, by providing a strength to a whole of the apparatus. Further, if the other moving means is provided, the cutting apparatus can be used as the cutting special purpose machine without being attached to the hydraulic shovel, the backhoe or the like.

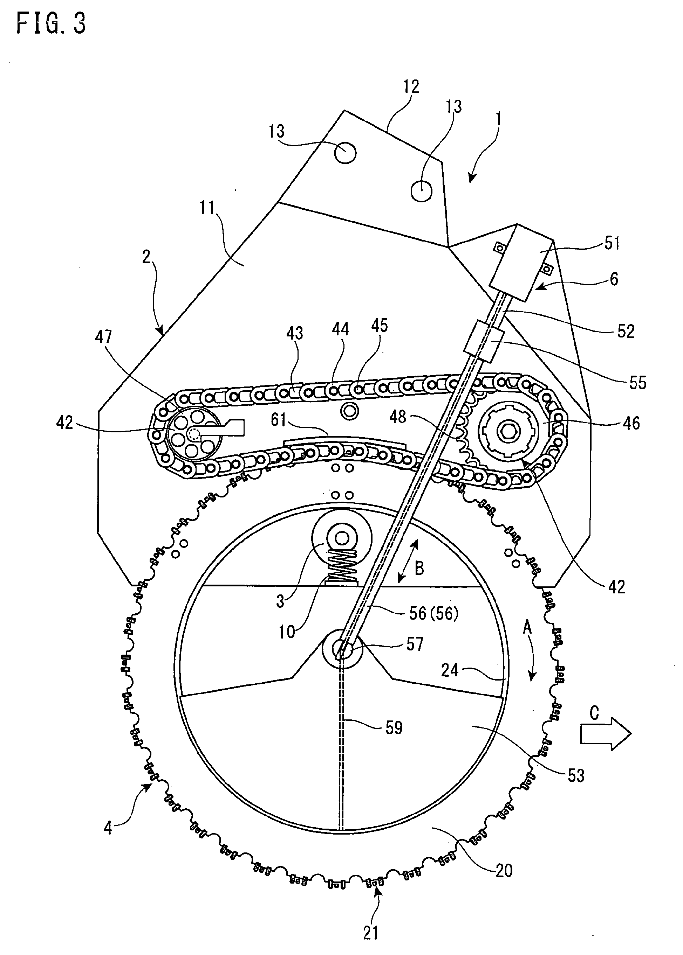

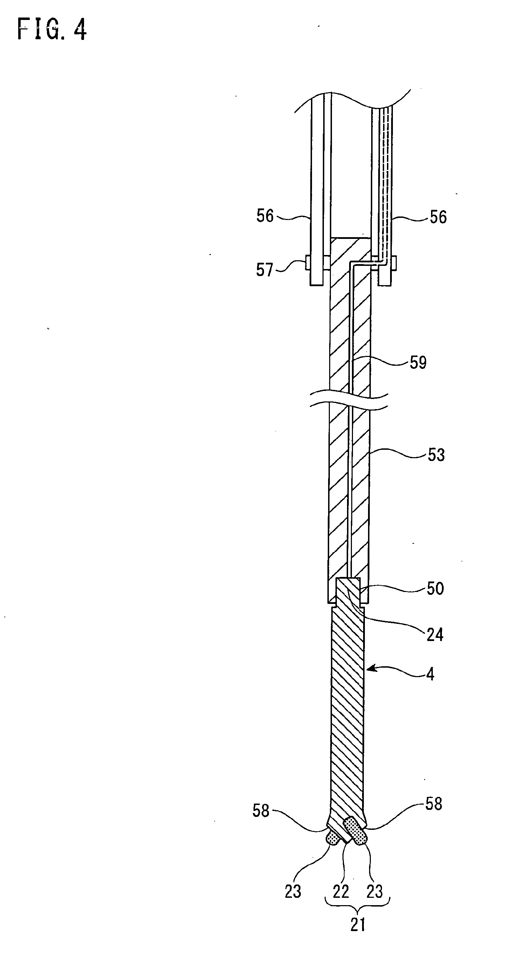

Next, a description will be given of a second embodiment in accordance with this invention with reference to Figs. 3 to 6. In this embodiment, as shown in Fig. 3, the impact applying means 6 is provided in an outer peripheral side of the ring saw 4, and applies the impact force generated by the striking rod 52 of the impact generating means 51 to an inner peripheral portion of the ring saw 4, and the striking force transmission body 53 is structured such as to come into slidable contact with the inner peripheral surface of the ring saw 4. Specifically, as shown in Figs. 3 and 4, a transmission base 55 is attached to a leading end portion of the stroking rod 52 of the impact generating means 51, and a pair of connection rods 56 are attached thereto via the transmission base 55. Further, a pair of connection rods 56 are coupled to the striking force transmission body 53 by a shaft member 57 in each of the leading end portions. In other words, the striking force transmission body 53 is axially supported to the leading end portion of the shaft member 57 so as to freely rotate. Further, the striking force transmission body 53 is structured such as to come into slidable contact with the inner peripheral surface of the ring saw 4. Further, in order to feed a lubricating oil to the slidable contact portion between the striking force transmission body 53 and the inner peripheral surface of the ring saw 4, a feed pipe 59 is pierced from a joint portion between the striking rod 52 and the impact generating means 51 to the slidable contact portion of the striking force transmission body 53 with the inner peripheral surface of the ring saw 4 so as to pass through inner portions of the striking rod 52, the transmission base 55, the connection rod 56, the shaft member 57 and the striking force transmission body 53.

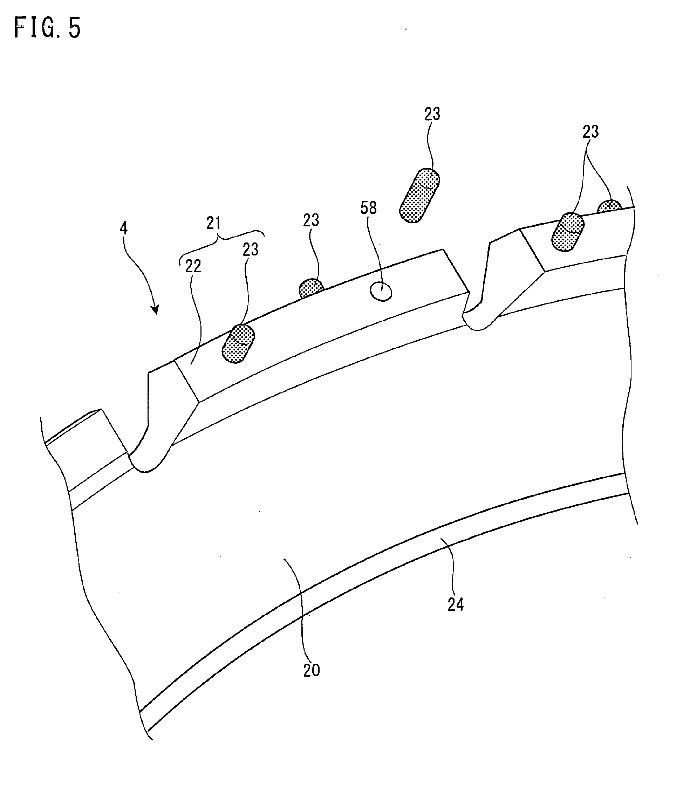

The ring saw 4 is structured, as shown in Fig. 5 in an enlarged manner, such that an outer peripheral leading end portion of an approximately annular ring saw main body 20 is a base body 22 having an approximately rhomboid cross sectional shape which is wider than a thickness of the ring saw main body 20, and a plurality of holes 58 are provided in a staggered manner in both inclined surfaces of the base body 22. Further, it is structured such as to serve as the cutting blade 21 by implanting a rod-like cutting edge 23 constructed by the cemented carbide chip in these holes 58. Further, a convex portion 24 is provided in an inner periphery of the ring saw main body 20 so as to be along the inner periphery.

The striking force transmission body 53 is formed as an approximately fan shape and a through hole is provided in a protruding manner in an upper surface thereof, as shown in Fig. 3. This through hole is inserter the shaft member 57 coupling the end portions of a pair of connection rods 56 therethrough, and the striking force transmission body 53 is rotatably pivoted by this shaft member 57. Further, a concave groove portion 50 is provided in a circular arc shaped outer periphery of the striking force transmission body 53 so as to be along the outer periphery. The concave groove portion 50 provided in the outer periphery of the striking force transmission body 53 is structured such as to be fitted to a convex portion 24 provided along an inner peripheral portion of the ring saw main body 20. Further, the striking force transmission body 53 comes into slidable contact with the ring saw 4. At a time of rotationally driving the ring saw 4, in order to further smoothly sliding the striking force transmission body 53 and the ring saw 4, the slidable contact portion is lubricated by feeding and applying the lubricating oil from the feed pipe 59 provided from the striking rod 52 to the striking force transmission body 53, between the convex portion 24 of the ring saw main body 20 and the concave groove portion 50 of the striking force transmission body 53.

As mentioned above, the subject 31 to be cut is crushed by applying the impact force generated by the impact generating means 51 to the rotationally driven ring saw 4 mainly toward a rear side in the cutting and forward moving direction, and applying a powerful impact to the cutting blade 21, and the high speed cut can be achieved by cutting while flicking the crushed portion, whereby it is possible to achieve an improvement of a cutting efficiency. Further, in this cutting apparatus, since the impact force is applied to the inner periphery of the ring saw 4 by arranging the impact applying means 6 in an outer side of the cutting blade 21 of the ring saw 4, it is possible to effectively utilize the space of the apparatus main body 2. Further, since the convex portion 24 provided in the inner periphery of the ring saw 4 is engaged with the concave groove portion 50 provided in the striking force transmission body 53, it is possible to directly and efficiently apply the impact force to the subject to be cut. Further, it is possible to reduce a friction resistance between the subject to be cut and the side surface portion of the ring saw main body 20 and efficiently transmit the rotating force transmitted from the driving portion 5 to the cutting blade 21 of the ring saw 4, by using the base body 22 being wider than the thickness of the ring saw main body 20 and having the approximately rhomboid cross sectional shape. In this case, in the second embodiment, the other structures and effects are the same as those of the first embodiment, the same reference numerals are attached to the members having the same functions as those of the first embodiment, and a description thereof will be omitted, in Figs. 3 to 6. In this case, in Fig. 3, an arrow A denotes a rotating direction of the ring saw 4, an arrow B denotes a impact force applying direction, and an arrow C denotes a cutting and forward moving direction, respectively.

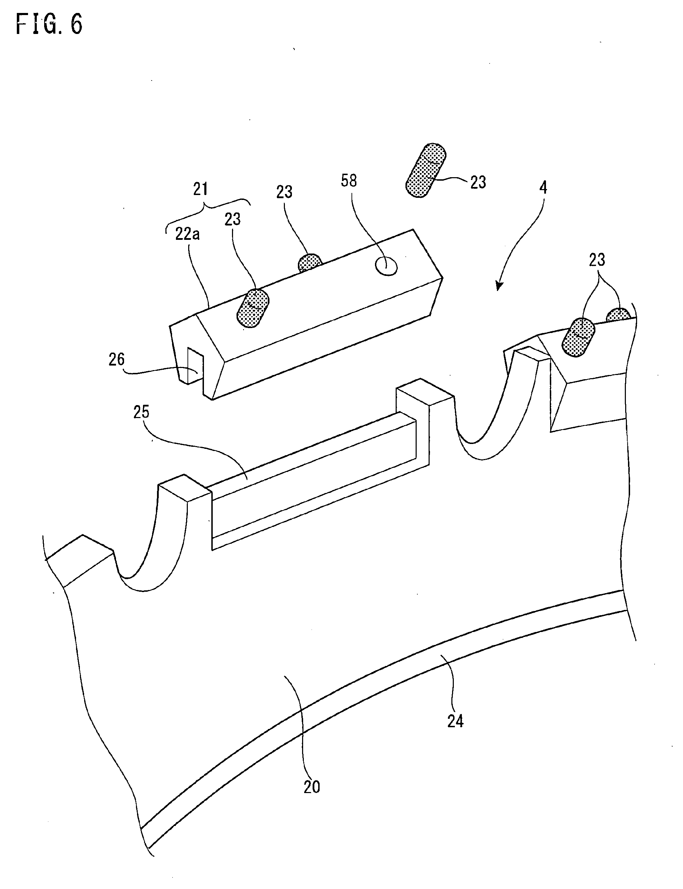

Further, as shown in Fig. 6, a narrow attaching portion 25 may be provided in such a manner as to be along an outer periphery of the ring saw main body 20, a fitting groove 26 may be provided in a base body 22a, and the base body 22a may be detachably provided with respect to the ring saw main body 20. In this case, the base body 22a is formed as an approximately pentagonal cross sectional shape which is wider than the thickness of the ring saw main body 20, and a plurality of holes 58 are provided in a staggered manner in both inclined surfaces of the base body 22a. Further, the cutting blade 21 is constructed by implanting the rod-like cutting edge 23 constructed by the cemented carbide chip in these holes 58.

It goes without saying that this invention is not limited to the embodiments mentioned above, but can be applied a lot of modifications and changes within the scope of this invention. For example, in the embodiment mentioned above, the annular chain 41 is used as the driving means 5, however, the annular chain 41 may employ an annular band such as an annular belt or the like. In this case, the annular belt is provided with an opening portion or a convex portion in such a manner as to engage with the cutting blade 21 of the ring saw 4 and the tooth 48 of the driving sprocket 46.

As mentioned above, in accordance with the present invention, it is possible to easily carry out the high-speed cutting by rotating while applying the strong impact force to the ring saw, crushing the subject to be cut such as the base rock, the stone, the concrete or the like, and cutting while flicking the crushed portion, it is possible to easily carry out the cutting work without requiring any high-level operating technique at a time of the cutting work, even by being attached as the attachment to the shovel type excavating machine such as the backhoe or the like, and an industrial applicability is high.

## Claims

1. A cutting apparatus with a ring saw, comprising:
a ring saw provided with a cutting blade; and
a driving means rotationally driving the ring saw around a center axis thereof,
wherein the ring saw is supported to a support body attached to an apparatus main body so as to freely oscillate in a cutting and traveling direction, and an impact applying means is provided so as to apply an impact force to a subject to be cut from a cutting blade of the ring saw under rotation.

2. A cutting apparatus with a ring saw as claimed in claim 1, wherein the impact applying means is provided with an impact generating means constructed by any one of a hydraulic breaker, an air breaker, a hydraulic drifter, an air drifter and a vibrator while having a striking rod structured such as to be movable forward and backward with respect to the ring saw, and a striking force transmission body rotatably attached to a leading end portion of the striking rod of the impact generating means and rotating while coming into contact with the cutting blades in an outer peripheral portion of the ring saw.

3. A cutting apparatus with a ring saw as claimed in claim 1, wherein the impact applying means is provided with an impact generating means constructed by any one of a hydraulic breaker, an air breaker, a hydraulic drifter, an air drifter and a vibrator while having a striking rod structured such as to be movable forward and backward with respect to the ring saw, and a striking force transmission body rotatably attached to a leading end portion of the striking rod of the impact generating means and coming into slidable contact with an inner peripheral portion of the ring saw.

4. A cutting apparatus with a ring saw as claimed in any one of claims 1 to 3, wherein a lubricant agent is filled in a contact portion between the striking force transmission body and the ring saw.

5. A cutting apparatus with a ring saw as claimed in any one of claims 1 to 4, wherein the support body is constructed by a support roller which is rotatably attached to the apparatus main body, and supports an inner peripheral surface of the ring saw.

6. A cutting apparatus with a ring saw as claimed in any one of claims 1 to 5, wherein the ring saw is constructed by a ring saw main body, and a cutting blade obtained by attaching a cutting edge to a base body which is detachable with respect to the ring saw main body, and the cutting blade is constructed by a cemented carbide chip in its cutting edge, is embedded and fixed to the base body, and is set to a state in which a head portion protrudes from the base body.

7. A cutting apparatus with a ring saw as claimed in claim 6, wherein in a thickness in a cutting groove width direction, a thickness direction of the base body is made larger than a thickness of the ring saw main body.

8. A cutting apparatus with a ring saw as claimed in any one of claims 5 to 7, wherein the driving means is constructed by an annular chain and a drive transmitting rotation body, and is provided with an energizing means energizing the support roller to a direction of the annular chain at a time of supporting the ring saw by the support roller.
